# EUROPÄISCHE PATENTSCHRIFT

(11) **EP 1 502 702 B1**
(45) Veröffentlichungstag und Bekanntmachung des Hinweises auf die Patenterteilung: **09.09.2009**
(21) Anmeldenummer: 04400037.0
(22) Anmeldetag: 16.07.2004
(51) Int. Cl.: B24B 35/00, B24B 47/06, B23Q 5/033

(54) **Vorrichtung zum Schleifen und/oder Finishen eines Werkstücks und Verfahren zum Betrieb der Vorrichtung**
Apparatus for grinding and/or finishing a workpiece and method for operating the same
Dispositif pour meuler et/ou finir une pièce et procédé pour sa mise en oeuvre

(30) Priorität: 28.07.2003 DE 10335376
(43) Veröffentlichungstag der Anmeldung: 02.02.2005
(73) Patentinhaber: Supfina Grieshaber GmbH & Co. KG, 77709 Wolfach (DE)
(72) Erfinder: Harter, Ingo, 77709 Wolfach (DE)
(74) Vertreter: Steimle, Josef

(56) Entgegenhaltungen:
- WO-A-98/05473
- GB-A- 1 391 557
- US-A- 2 928 244
- US-A- 5 060 423

## Beschreibung

Die Erfindung betrifft eine Vorrichtung zum Schleifen und/oder Finishen eines an und/oder in mindestens einer Werkstückaufnahme aufgenommenen Werkstücks gemäß dem Oberbegriff des Anspruchs 1. Eine solche Vorrichtung ist aus WO 98/05473 bekannt. Die Erfindung betrifft außerdem ein Verfahren zum Betrieb einer solchen Vorrichtung.

Aus dem Stand der Technik sind Vorrichtungen bekannt, mit denen zu schleifende und/oder zu finishende Werkstücke in eine oszillierende Bewegung versetzbar sind. Die oszillierenden Werkstücke können mit Hilfe von Schleifscheiben, -bändern oder -steinen und/oder mit Hilfe von Finishscheiben, -bändern oder -steinen bearbeitet werden, um eine gute Qualität der Oberflächen der Werkstücke zu erzeugen.

Aus dem Stand der Technik ist es bekannt, die oszillierende Bewegung beispielsweise mit Hilfe eines umlaufenden Antriebs und eines mechanischen Exzenters zu erzeugen. Mit einem solchen Antrieb können bei einer Oszillationsamplitude von ± 0,5 mm eine maximale Oszillationsfrequenz von 600 min⁻¹ erreicht werden. Nachteilig bei diesen Antrieben ist, dass die Antriebsachse und die Oszillationsrichtung rechtwinklig zueinander stehen und somit die Bewegung umgelenkt werden muss. Bedingt durch die exzentrisch gelagerten hohen Massen, große Kräfte auftreten und daher ein hoher konstruktiver Aufwand erforderlich ist, um diese Kräfte aufzunehmen. Nachteilig ist weiterhin, dass die Amplitude lediglich vor Beginn der Bearbeitung eines Werkstücks einstellbar ist, und danach die Bearbeitung des Werkstücks erst wieder gestoppt werden muss, bevor eine geänderte Amplitude eingestellt werden kann.

Aus dem Stand der Technik ist weiterhin bekannt, Werkstücke oszillierend mit Hilfe von Motoren anzutreiben, deren sich zyklisch ändernde Drehrichtung mit Hilfe einer Gewindespindel oder Zahnstange in einen Hin- und Rückhub umgewandelt wird. Bei solchen Antrieben werden vorzugsweise Kugelrollspindeln verwendet, die eine weitestgehend spielfreie oszillierende Bewegung einer Werkstückaufnahme ermöglichen. Die maximale Oszillationsfrequenz ist durch die Massenträgheit von Motor und Übertragungselementen begrenzt. Bei einer Amplitude von ± 0,5 mm beträgt sie 300 min⁻¹_{.}

Aus der WO98/05473 ist eine Vorrichtung zur Bearbeitung eines Werkstücks bekannt, welches zwischen einem Reitstock und einem Spindelstock aufgenommen ist. Der Reitstock und der Spindelstock sind in ihrem Abstand zu einem zwischen dem Spindelstock und dem Reitstock angeordneten Schlitten einstellbar. Der Schlitten ist über eine Exzenteranordnung mit Hilfe eines Motors oszillierend angetrieben.

Aus der GB 1 391 557 A ist ein Kontrollsystem für einen Werkzeugmaschinenschlitten bekannt, welcher mittels eines hydraulischen Antriebs in eine oszillierende Bewegung versetzbar ist.

Aus der US 2,928,244 A ist ein hydraulischer Antrieb bekannt, mittels welchem eine oszillierende Bewegung erzeugbar ist.

Ausgehend hiervon liegt der vorliegenden Erfindung die Aufgabe zugrunde, eine Vorrichtung zum Schleifen und/oder Finishen eines Werkstücks zu schaffen, die es erlaubt, die maximale Oszillationsfrequenz bei möglichst flexibler Handhabung der Vorrichtung zu erhöhen.

Diese Aufgabe wird erfindungsgemäß durch eine Vorrichtung mit den Merkmalen des Anspruchs 1 gelöst.

Die Verwendung eines hydraulischen Antriebs ermöglicht die Erhöhung der maximalen Oszillationsfrequenz. In Versuchen wurde festgestellt, dass bei einer Amplitude von ± 0,5 mm problemlos eine Oszillationsfrequenz von 1000 min⁻¹ erreichbar ist. Diese Oszillationsfrequenz dürfte bei Verwendung der erfindungsgemäßen Vorrichtung aber auch noch weiter steigerbar sein. Es kann in jedem Fall bereits jetzt festgestellt werden, dass die maximale Oszillationsfrequenz gegenüber Antrieben mit Exzenter um 400 min⁻¹ und gegenüber Antrieben mit umkehrbarer Drehrichtung um 700 min⁻¹ gesteigert werden konnte.

Da bei einem hydraulischen Antrieb die Krafterzeugung und der Oszillationshub parallel zueinander liegen, vorzugsweise in einer Linie, werden vergleichsweise kleine Massen in Bewegung gesetzt. Die Werkstückaufnahme kann insgesamt relativ klein und leicht bauen. Weiterhin ist es vorteilhaft, dass während der Bearbeitung eines Werkstücks die Oszillationsamplitude veränderbar ist. Dies kann durch eine geeignete Ansteuerung des hydraulischen Antriebs erreicht werden.

In vorteilhafter Weise ist ein zusätzlicher Antrieb vorgesehen, mit dem das Werkstück rotierend antreibbar ist. Mit einer solchen Vorrichtung können den Rotationsbewegungen eines Werkstücks, beispielsweise einer Kurbelwelle oder einer Nockenwelle, Oszillationsbewegungen überlagert werden. Somit ist es möglich, Oberflächen mit einer besonders hohen Qualität zu erzeugen. Solche Oberflächenqualitäten werden beispielsweise für die Lagerflächen von Kurbelwellen und für die Laufflächen von Nockenwellen benötigt.

War bisher, bedingt durch die relativ niedrige maximale Oszillationsfrequenz die Erzeugung eines Kreuzschliffs nur bei vergleichsweise niedrigen Rotationszahlen möglich, kann nunmehr, dank des hydraulischen Antriebs und der daraus resultierenden höheren maximalen Oszillationsfrequenzen ein Kreuzschliff auch erzeugt werden, wenn das Werkstück mit höheren Umdrehungszahlen rotiert.

Durch die höheren Oszillationsfrequenzen und/oder einsetzbaren Rotationszahlen kann der Werkstückabtrag während des Schleifens oder Finishens erhöht werden, so dass die Bearbeitungszeit eines Werkstücks verringert werden kann. Somit ist ein Werkstück kostengünstiger herstellbar.

Es sind zwei Werkstückaufnahmen vorgesehen, zwischen denen das Werkstück lagerbar und/oder einspannbar und/oder aufnehmbar ist. Eine solche Ausführung ermöglicht das Lagern und/oder Einspannen von beispielsweise länglichen Werkstücken wie Kurbel- oder Nockenwellen. Dabei kann eine der Werkstückaufnahmen an einem der freien Enden des Werkstücks angeordnet sein und die andere Werkstückaufnahme am anderen freien Ende des Werkstücks.

Die Erfindung sieht vor, dass eine Werkstückaufnahme vorgesehen ist, die für ein Einspannen des Werkstücks passiv nachführbar ist. Dies bedeutet, dass eine der Werkstückaufnahmen mit dem hydraulischen Antrieb versehen ist und das Werkstück oszillierend antreiben kann und dass eine andere Werkstückaufnahme vorgesehen ist, die die Bewegungen des Werkstück und damit der vom hydraulischen Antrieb angetriebenen Werkstückaufnahme nachvollzieht, ohne dabei selbst angetrieben zu sein. Durch das passive Nachführen ist gewährleistet, dass das Werkstück zwischen den Werkstückaufnahmen eingespannt bleibt und nicht während der Oberflächenbearbeitung aus den Werkstückaufnahmen herausfallen kann. Für ein zuverlässiges Einspannen des Werkstücks kann es vorteilhaft sein, dass die passiv nachführbare Werkstückaufnahme federbeaufschlagt ist. Somit wird ein Energiespeicher geschaffen, der in einer Hubrichtung der Oszillationsbewegung aufgeladen wird und sich in der zur ersten Hubrichtung entgegengesetzten zweiten Hubrichtung der Oszillationsbewegung entladen kann und die Werkstückaufnahme nachführt.

Eine Werkstückaufnahme ist als Spindelstock und eine Werkstückaufnahme ist als Reitstock ausgebildet. Unter Spindelstock soll eine drehbare Lagermöglichkeit eines Werkstücks verstanden werden, mit der das Werkstück rotierend antreibbar ist. Dieses ist zwischen Spindelstock und Reitstock eingespannt, wobei der Reitstock üblicherweise nicht mit einem eigenen Antrieb für die Rotation des Werkstücks ausgerüstet ist. Dies wäre jedoch ohne Weiteres möglich.

Es kann sein, dass der hydraulische Antrieb am Spindelstock vorgesehen ist und der Reitstock passiv nachführbar ist, oder dass der hydraulische Antrieb am Reitstock vorgesehen ist und der Spindelstock passiv nachführbar ist. Bei Anordnung des hydraulischen Antriebs am Spindelstock können sowohl der zusätzliche Antrieb für die Rotation des Werkstücks als auch der hydraulische Antrieb benachbart zueinander mit Energie versorgt werden. Bei Anordnung des hydraulischen Antriebs am Reitstock und passiver Nachführung des Spindelstocks kann der von dem hydraulischen Antrieb und von dem zusätzlichen Antrieb für die Rotation des Werkstücks eingenommene Bauraum im Wesentlichen gleichmäßig auf die Umgebung des Reitstocks einerseits und des Spindelstocks andererseits verteilt werden.

Es kann auch vorgesehen sein, dass am Spindelstock und am Reitstock jeweils ein hydraulischer Antrieb vorgesehen ist.

In diesem Fall kann der oszillierende Antrieb des Werkstücks sowohl vom Spindelstock als auch vom Reitstock aus erfolgen.

Nach einer vorteilhaften Ausführungsform weist der hydraulische Antrieb einen Hydraulikzylinder auf. Ein solcher Hydraulikzylinder ist als zuverlässiges Konstruktionselement von einer Vielzahl von Herstellern erhältlich und kann, je nach benötigter Antriebsleistung und/oder Hubweg, aus einer Vielzahl von standardisierten Hydraulikzylindern ausgewählt werden. Üblicherweise wird der zur Verfügung stehende Hubweg eines Hydraulikzylinders den maximal benötigten Oszillationshub, der üblicherweise nur maximal wenige Millimeter beträgt, um ein Vielfaches übertreffen. Je länger der Hubweg eines solchen Hydraulikzylinders allerdings ist, desto variabler kann die erfindungsgemäße Vorrichtung für Werkstücke unterschiedlicher Längen eingesetzt werden.

Durch die an dem zu bearbeitenden Werkstück anliegenden Schleif- und/oder Finishmittel werden Druckkräfte auf das Werkstück übertragen, die in seitlicher Richtung, d.h. in Richtung der Oszillationshübe, hohe Reibkräfte erzeugen. Zur Überwindung dieser hohen Reibkräfte kann es erforderlich sein, Hydraulikzylinder mit einem vergleichsweise großen Durchmesser zu verwenden. In Versuchen mit für den Automobilbau üblichen Kurbelwellen hat sich ein Hydraulikzylinderdurchmesser von ca. 32 bis 60 mm bewährt.

Vorteilhafterweise ist der Hydraulikzylinder doppelt wirkend, so dass für den Hin- und Rückhub einer oszillierenden Bewegung derselbe Hydraulikzylinder verwendet werden kann. Dieser Hydraulikzylinder kann über ein Proportionalwegeventil mit Druck beaufschlagbar sein. Die Verwendung eines Proportionalwegeventils hat den Vorteil, dass der Hydraulikzylinder flexibler ansteuerbar ist und beispielsweise das Geschwindigkeitsverhalten des Kolbens des Hydraulikzylinders beeinflussbar ist.

Besonders vorteilhaft ist es, wenn ein Lageerfassungssystem vorgesehen ist, mit dem die Lage des hydraulischen Antriebs und/oder mindestens einer Werkstückaufnahme und/oder des Kolbens des Hydraulikzylinders und/oder des Werkstücks erfassbar ist. Diese Lageerfassung hat den Vorteil, dass eine Sensorik geschaffen wird, mit der eine Vergleichsmöglichkeit zwischen der tatsächlichen Bewegung des Werkstücks und der gewünschten Bewegung des Werkstücks ermöglicht ist. Das Lageerfassungssystem kann beispielsweise aus mechanischen Tastern bestehen, die mit Anschlagflächen des hydraulischen Antriebs und/oder mindestens einer Werkstückaufnahme und/oder des Kolbens des Hydraulikzylinders und/oder eines Werkstücks zusammenwirken. Das Lageerfassungssystem kann auch durch optoelektronische, induktive und/oder magnetorestriktive Sensoren gebildet sein, die eines der genannten Bauteile der Vorrichtung und/oder das Werkstück anhand von Referenzlinien und/oder -flächen in ihrer Lage erfassen können.

Es können mehrere Lageerfassungssysteme vorgesehen sein, mit denen jeweils die Lage einer Werkstückaufnahme erfassbar ist. Ein solches System ermöglicht es, zu überprüfen, ob die sich beispielsweise gegenüberliegenden Werkstückaufnahmen, zwischen denen ein Werkstück angeordnet ist, sich synchron zueinander bewegen, so dass ein zuverlässiges Einspannen des Werkstücks gewährleistet ist. Bei Abweichung der von den beiden Lageerfassungssystemen erfassten Lagen kann beispielsweise ein Abbruch der Schleif- oder Finishbearbeitung des Werkstücks erfolgen, um einem möglichen Lösen des Werkstücks aus der erfindungsgemäßen Vorrichtung vorzubeugen.

Es ist weiterhin sehr vorteilhaft, wenn das Proportionalwegeventil in Abhängigkeit der Lage des hydraulischen Antriebs und/oder mindestens einer Werkstückaufnahme und/oder des Kolbens des Hydraulikzylinders und/oder des Werkstücks ansteuerbar ist.

Durch eine solche Anordnung kann ein Regelkreis aufgebaut werden, wobei die Stellung des Proportionalwegeventils die Versorgung des Hydraulikzylinders mit Volumenstrom und Druck beeinflusst. Die daraus resultierende Lage des Kolbens des Hydraulikzylinders kann über das Lageerfassungssystem und dem Proportionalventil zugeführt werden.

Eine weitere Ausführungsform der Erfindung sieht vor, dass dem Hydraulikzylinder ein Sperrventil vorgeschaltet ist. Dieses Sperrventil ermöglicht es, den Hydraulikzylinder von der Versorgung mit Volumenstrom und Druck zu entkoppeln und den Hydraulikzylinder in einem Zustand zu halten, indem ein zuverlässiges Einspannen des Werkstücks gewährleistet ist. Somit kann, unabhängig von der aktuellen Versorgung der erfindungsgemäßen Vorrichtung mit Volumenstrom und Druck des Hydraulikfluids, vermieden werden, dass beispielsweise bei einer Störung des Systems der Hydraulikzylinder spannungsfrei wird und somit ein Lösen des Werkstücks von der Werkstückaufnahme oder von den Werkstückaufnahmen erfolgen könnte.

Es kann weiterhin ein Druckregelventil vorgesehen sein, mit dem der Druck, mit dem der Hydraulikzylinder beaufschlagbar ist, regelbar ist. Durch Veränderung des Drucks kann bestimmt werden, welche Kräfte der Hydraulikzylinder (bei vorgegebener Kolbenfläche) maximal aufbauen kann. Durch Einsatz eines Proportionaldruckreglers kann während der Bearbeitung der Druck und somit die Kraft auf das Werkstück verändert werden. Im Zusammenspiel von Spindel- und Reitstock, die das Werkstück bei gleichzeitig auf das Werkstück wirkenden Reibkräften verschieben, kann somit die Einspannkraft und die damit verbundene Durchbiegung des Werkstückes reduziert werden.

Die Erfindung betrifft weiterhin ein Verfahren zum Betrieb einer erfindungsgemäßen Vorrichtung, die sich dadurch kennzeichnet, dass während des Schleifens und/oder Finishens des Werkstücks die Amplituden und/oder die Frequenz der Oszillationsbewegung variabel hydraulisch erzeugt werden. Durch das Anpassen der Amplituden und/oder der Frequenz der Oszillationsbewegung während der Werkstückbearbeitung können Nebenzeiten reduziert und dabei optimale Schleifergebnisse erzeugt werden.

Es ist auch möglich, dass das Werkstück zwischen zwei aufeinanderfolgenden Oszillationshüben stillgesetzt wird. Ein solches Stillsetzen kann sowohl zwischen einem Hin- und einem Rückhub einer Oszillationsbewegung erfolgen als auch im Anschluss an mehrere aufeinander folgende Oszillationshübe. Bei einer Kombination mit einer rotierenden Bewegung des Werkstücks kann somit mit der erfindungsgemäßen Vorrichtung auch eine konventionelle Schleif- und/oder Finishbearbeitung erfolgen. Es kann weiterhin, vorzugsweise NC-gesteuert, die Verfahrgeschwindigkeit und -beschleunigung während der Oszillation verändert werden. In Kombination mit der Rotation werden somit spezifische Oberflächenstrukturen geschaffen.

Die erfindungsgemäße Vorrichtung kann auch dahingehend genutzt werden, dass der hydraulische Antrieb verwendet wird, um einen Hub zum Einspannen des Werkstücks und/oder zur Veränderung der relativen Lage des Werkstücks gegenüber der Vorrichtung auszuführen. Somit kann der hydraulische Antrieb genutzt werden, um das Werkstück in der Werkstückaufnahme oder zwischen den Werkstückaufnahmen einzuspannen oder um das Werkstück für einen folgenden Schleif- und/oder Finishvorgang in eine geeignete Bearbeitungsposition zu bringen.

Das Werkstück kann auch während des Schleifens oder Finishens, und zwar der Oszillationsbewegung überlagert, verschoben werden. Dies hat den Vorteil, dass das oszillierende Werkstück entlang eines Abschnitts bearbeitet werden kann, der breiter oder größer ist als die vom Schleifmaterial (beispielsweise Schleifstein oder Schleifband) zur Verfügung gestellte Schleifbreite. Durch Überlagerung der Oszillationsbewegung und der Verschiebebewegung ist es nicht erforderlich, die Schleifmittel vom Werkstück abzuheben, das Werkstück neu zu positionieren und sodann die Schleifmittel erneut anzusetzen. Vielmehr können die Schleifmittel in Kontakt mit dem Werkstück bleiben, während das oszillierende Werkstück verschoben wird.

Die erfindungsgemäße Vorrichtung kann auch dafür eingesetztwerden, das Werkstück besonders effektiv zu reinigen. Hierfür kann das Werkstück rotierend angetrieben werden und der Rotationsbewegung eine Oszillationsbewegung überlagert werden. Insbesondere wenn das Werkstück mit höherer Drehzahl, Frequenz und/oder Amplitude als während des Schleifens und/oder Finishens des Werkstücks angetrieben wird, ist eine sehr gute Reinigungswirkung erzielbar. Das Werkstück kann dabei schlagartig hin- und herbewegt werden, das bedeutet, dass die Oszillationsbewegung derart ausgeführt wird, dass das Werkstück starken Be- und Entschleunigungen ausgesetzt wird.

Weitere vorteilhafte Ausgestaltungen und Einzelheiten der Erfindung sind der folgenden Beschreibung zu entnehmen, in der die Erfindung anhand des in der Zeichnung dargestellten Ausführungsbeispiels näher beschrieben und erläutert ist.

Es zeigen:
- Figur 1: eine perspektivische Ansicht einer erfindungsgemäßen Vorrichtung mit zwei hydraulischen Antrieben; und
- Figur 2: eine Schaltung zur Steuerung eines der in Figur 1 dargestellten hydraulischen Antriebe.

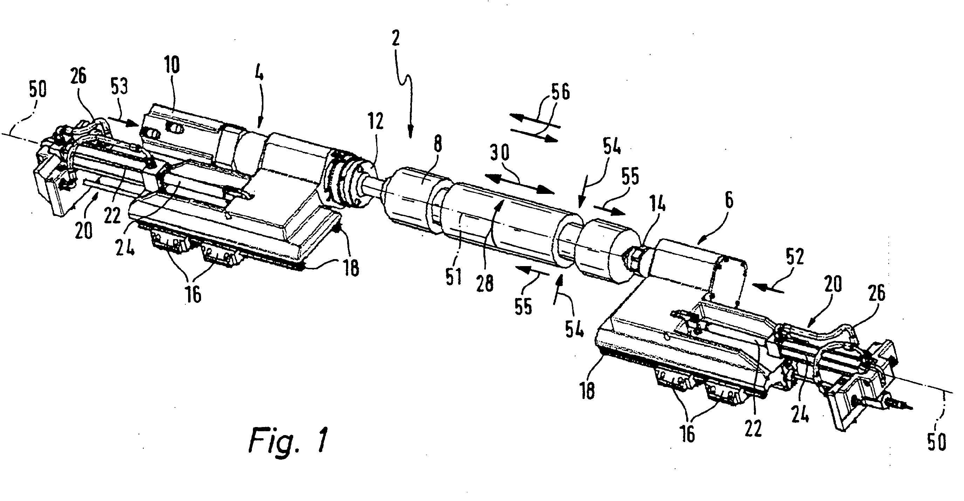

In Figur 1 ist eine erfindungsgemäße Vorrichtung allgemein mit dem Bezugszeichen 2 bezeichnet. Diese weist einen linkerhand dargestellten Spindelstock 4 sowie ein rechterhand dargestellten Reitstock 6 auf. Zwischen Spindelstock 4 und Reitstock 6 ist ein schleifend und finishend zu bearbeitendes Werkstück 8 angeordnet.

Der Spindelstock 4 weist einen Antrieb 10 für einen rotatorischen Antrieb des Werkstücks 8 auf. Am Spindelstock 4 ist, dem Werkstück 8 zugewandt, eine Mitnahme 12 vorgesehen, mit dem das Werkstück 8 mit seinem dem Spindelstock 4 zugewandten Ende mitgenommen wird. Das Werkstück 8 ist an seinem dem Reitstock 6 zugewandten Ende in einer drehbaren Spitze 14 des Reitstocks 6 aufgenommen.

Der Spindelstock 4 sowie der Reitstock 6 weisen Schlitten 16 auf, mit denen sie entlang von in Figur 1 nur abschnittsweise dargestellten Linearführungen 18 verschiebbar sind.

Der Spindelstock 4 und der Reitstock 6 sind jeweils mit Hilfe eines Hydraulikzylinders 20 antreibbar. Die Hydraulikzylinder 20 weisen jeweils ein Gehäuse 22 auf, in dem ein Kolben 24 verschiebbar gelagert ist, wobei die Kolben 24 mit dem Spindelstock 4 bzw. mit dem Reitstock 6 gekoppelt sind, so dass der Spindelstock 4 bzw. der Reitstock 6 und damit das Werkstück 8 oszillierend antreibbar sind. Die Hydraulikzylinder 20 sind über Versorgungsleitungen 26 mit Hydraulikfluid versorgt.

Zum Schleifen und/oder Finishen des Werkstücks 8 kann dieses mit Hilfe des Antriebs 10 in eine Rotationsbewegung entsprechend Bezugszeichen 28 versetzt werden. Der Rotationsbewegung 28 kann eine Oszillationsbewegung 30 überlagert werden, in der zumindest einer der Kolben 24 einer der Hydraulikzylinder 20 aktiv hin- und herbewegt wird.

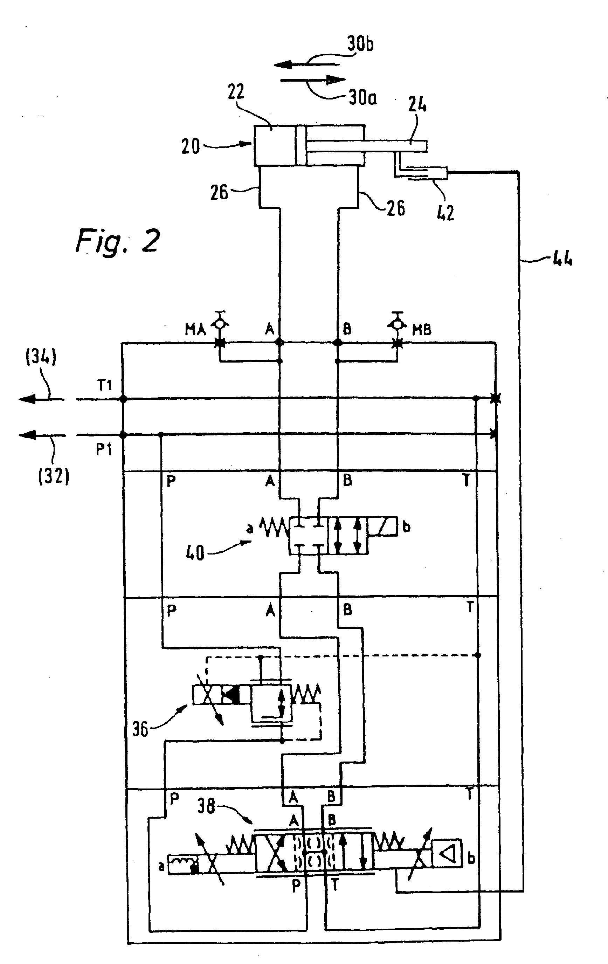

In Figur 2 ist einer der in Figur 1 dargestellten Hydraulikzylinder schematisch dargestellt. Zu Erkennen ist das Gehäuse 22, der Kolben 24 sowie die Versorgungsleitungen 26.

Der Hydraulikzylinder 20 wird mit Hilfe einer in Figur 2 nicht dargestellten Pumpe 32 mit Hydraulikfluid versorgt. Weiterhin ist auf der drucklosen Seite des Hydrauliksystems ein (nicht dargestellter) Tank 34 vorgesehen.

Der Pumpe 32 ist ein Druckregler 36 nachgeschaltet, mit dem der Druck beeinflussbar ist, der dem Hydraulikzylinder 20 zuführbar ist. Optional kann auch ein Proportionaldruckregler vorgesehen sein. Zwischen Druckregler und Hydraulikzylinder 20 ist weiterhin ein Proportionalwegeventil 38 vorgesehen, über das der Verfahrweg des Kolbens 24 innerhalb des Gehäuses 22 des Hydraulikzylinders 20 bestimmt wird.

Dem Proportionalwegeventil 38 nachgeschaltet ist ein Sperrventil 40, mit dem die Versorgung des Hydraulikzylinders 20 mit Hydraulikfluid unterbrochen werden kann.

Der Kolben 24 des Hydraulikzylinders 20 ist mit einem Lageerfassungssystem 42 ausgerüstet. Dieses System erfasst die Lage oder Stellung des Kolbens 24 und ist über eine Steuerleitung 44 mit der Steuerung des Proportionalwegeventils 38 verbunden.

Um den in Figur 2 dargestellten Kolben 24 in mit 30a bezeichneter Richtung aus dem Gehäuse 22 herauszubewegen, muss das Proportionalwegeventil 38 aus der in Figur 2 dargestellten Stellung heraus nach links verschoben werden, um die mit "A" bezeichnete Versorgungsleitung 26 mit Hydraulikfluid zu versorgen. Hierfür muss auch das Sperrventil 40 aus der in Figur 2 dargestellten Stellung heraus nach links betätigt werden, damit der Hydraulikzylinder 20 nicht von der Druckversorgung durch die Pumpe 32 entkoppelt ist. Die durch Schaltung der Ventile 38 und 40 ermöglichte Bewegung des Kolbens 24 in Richtung 30a kann durch das Lageerfassungssystem 42 erfasst werden. Die vom Lageerfassungssystem 42 erfasste Lage kann über die Steuerleitung 44 dem Proportionalwegeventil 38 rückgekoppelt werden.

Für eine Bewegung des Kolbens in mit 30b bezeichneter Richtung muss das Proportionalwegeventil aus der in Figur 2 dargestellten Stellung heraus nach rechts verschoben werden, um die mit "B" bezeichnete Versorgungsleitung 26 mit Hydraulikfluid zu versorgen.

Durch die Hydraulikzylinder 20 werden Antriebskräfte erzeugt, die entlang von Achsen 50 wirken, die koaxial zu den Achsen der Kolben 24 der Hydraulikzylinder 20 verlaufen. Die Achsen 50 verlaufen parallel zur Längsachse 51 des Werkstücks 8. Die am Reitstock 6 erzeugbare Antriebskraft ist in Figur 1 mit dem Bezugszeichen 52 bezeichnet; die am Spindelstock 4 erzeugbare Antriebskraft mit dem Bezugszeichen 53.

Während der Bearbeitung mit (nicht dargestellten) Schleifund/oder Finishmitteln wirkt auf das Werkstück 8 eine Normalkraft 54. Entsprechend wirken bei einer Oszillationsbewegung 30 des Werkstücks 8 Reibkräfte 55.

Wenn das massenbehaftete Werkstück 8 beschleunigt wird, wirken der Bewegung entgegengesetzte Trägheitskräfte 56.

Für eine Bewegung des Werkstücks 8 in Richtung auf den Reitstock 6 muss die am Spindelstock 4 wirkende Antriebskraft 53 größer sein als die Summe aus am Reitstock 6 wirkender Antriebskraft 52, der Reibkraft 55 und der Trägheitskraft 56.

Für eine Bewegung des Werkstücks 8 in Richtung auf den Spindelstock 4 muss die am Reitstock 6 wirkende Antriebskraft 52 größer sein als die Summe aus am Spindelstock 4 wirkender Antriebskraft 53, der Reibkraft 55 und der Trägheitskraft 56.

## Patentansprüche

1. Vorrichtung (2) zum Schleifen und/oder Finishen eines an und/oder in mindestens einer Werkstückaufnahme aufgenommenen Werkstücks (8), wobei eine Werkstückaufnahme als Spindelstock (4) und eine Werkstückaufnahme als Reitstock (6) ausgebildet ist, wobei das Werkstück (8) zwischen dem Spindelstock (4) und dem Reitstock (6) lagerbar und/oder einspannbar und/oder aufnehmbar ist, wobei mindestens eine Antriebsvorrichtung vorgesehen ist, mit der das Werkstück (8) in eine oszillierende Bewegung (30) versetzbar ist, **dadurch gekennzeichnet, dass** die Antriebsvorrichtung als hydraulischer Antrieb (20) ausgebildet ist und dass der hydraulische Antrieb (20) an dem Spindelstock (4) vorgesehen ist und der Reitstock (6) passiv nachführbar ist oder dass der hydraulische Antrieb (20) an dem Reitstock (6) vorgesehen ist und der Spindelstock (4) passiv nachführbar ist.

2. Vorrichtung (2) nach Anspruch 1, **dadurch gekennzeichnet, dass** ein zusätzlicher Antrieb (10) vorgesehen ist, mit dem das Werkstück (8) rotierend antreibbar ist.

3. Vorrichtung nach einem der vorhergehenden Ansprüche, **dadurch gekennzeichnet, dass** die Achse (50), in der die Antriebsvorrichtung (20) die Antriebskraft (52, 53) erzeugt, parallel zu einer Werkstückachse (51) verläuft, in die die Antriebskraft (52, 53) eingeleitet ist.

4. Vorrichtung nach einem der vorhergehenden Ansprüche, **dadurch gekennzeichnet, dass** die Achse (50), in der die Antriebsvorrichtung (20) die Antriebskraft (52, 53) erzeugt, koaxial zu einer Werkstückachse (51) verläuft, in die die Antriebskraft (52, 53) eingeleitet ist.

5. Vorrichtung (2) einem der vorhergehenden Ansprüche, **dadurch gekennzeichnet, dass** die passiv nachführbare Werkstückaufnahme federbeaufschlagt ist.

6. Vorrichtung (2) nach einem der vorhergehenden Ansprüche, **dadurch gekennzeichnet, dass** am Spindelstock (4) und am Reitstock (6) jeweils ein hydraulischer Antrieb (20) vorgesehen ist.

7. Vorrichtung (2) nach einem der vorhergehenden Ansprüche, **dadurch gekennzeichnet, dass** der hydraulische Antrieb (20) einen Hydraulikzylinder (20) aufweist.

8. Vorrichtung (2) nach Anspruch 7, **dadurch gekennzeichnet, dass** der Hydraulikzylinder (20) doppeltwirkend ist.

9. Vorrichtung (2) nach Anspruch 7 oder 8, **dadurch gekennzeichnet, dass** der Hydraulikzylinder (20) über ein Proportionalwegeventil (38) mit Druck beaufschlagbar ist.

10. Vorrichtung (2) nach einem der vorhergehenden Ansprüche, **dadurch gekennzeichnet, dass** ein Lageerfassungssystem (42) vorgesehen ist, mit dem die Lage des hydraulischen Antriebs (20) und/oder mindestens einer Werkstückaufnahme und/oder des Kolbens (24) des Hydraulikzylinders (20) und/oder des Werkstücks (8) erfassbar ist.

11. Vorrichtung (2) nach Anspruch 10, **dadurch gekennzeichnet, dass** mehrere Lageerfassungssysteme (42) vorgesehen sind, mit denen jeweils die Lage einer Werkstückaufnahme erfassbar ist.

12. Vorrichtung (2) nach Anspruch 10 oder 11, **dadurch gekennzeichnet, dass** das Proportionalwegeventil (38) in Abhängigkeit der Lage des hydraulischen Antriebs (20) und/oder mindestens einer Werkstückaufnahme und/oder des Kolbens (24) des Hydraulikzylinders (20) und/oder des Werkstücks (8) ansteuerbar ist.

13. Vorrichtung (2) nach einem der Ansprüche 7 bis 12, **dadurch gekennzeichnet, dass** dem Hydraulikzylinder (20) ein Sperrventil (40) vorgeschaltet ist.

14. Vorrichtung (2) nach einem der Ansprüche 7 bis 13, **dadurch gekennzeichnet, dass** ein Druckregelventil (36) vorgesehen ist, mit dem der Druck, mit dem der Hydraulikzylinder (20) beaufschlagbar ist, regelbar ist.

15. Vorrichtung (2) nach Anspruch 14, **dadurch gekennzeichnet, dass** ein Proportionaldruckregelventil vorgesehen ist, mit dem während der Bearbeitung des Werkstücks (8) der Druck und somit die auf das Werkstück (8) wirkende Antriebskraft (52, 53) veränderbar ist.

16. Vorrichtung (2) nach einem der vorhergehenden Ansprüche, **dadurch gekennzeichnet, dass** der Spindelstock (4) und der Reitstock (6) mit einem Proportionaldruckregelventil ausgerüstet sind, die im Zusammenspiel das Werkstück (8) bei auf das Werkstück (8) wirkender Reibkraft (55) verschieben, so dass die auf das Werkstück (8) wirkende Einspannkraft und die Durchbiegung des Werkstücks (8) reduzierbar sind.

17. Verfahren zum Betrieb einer Vorrichtung (2) nach einem der vorhergehenden Ansprüche, **dadurch gekennzeichnet, dass** während des Schleifens und/oder Finishens des Werkstücks die Amplituden und/oder die Frequenz der Oszillationsbewegung (30) variabel hydraulisch erzeugt werden.

18. Verfahren zum Betrieb einer Vorrichtung (2) nach einem der Ansprüche 1 bis 16, **dadurch gekennzeichnet, dass** das Werkstück (8) zwischen aufeinander folgenden Oszillationshüben (30a, 30b) stillgesetzt wird.

19. Verfahren zum Betrieb einer Vorrichtung (2) nach einem der Ansprüche 1 bis 16, **dadurch gekennzeichnet, dass** das Werkstück (8) während seiner Bearbeitung mit veränderbarer Beschleunigung und/oder -geschwindigkeit oszilliert werden kann und somit spezifische Oberflächen und Geometrien erzeugt werden.

20. Verfahren zum Betrieb einer Vorrichtung (2) nach einem der Ansprüche 1 bis 16, **dadurch gekennzeichnet, dass** der hydraulische Antrieb (20) verwendet wird, um einen Hub zum Einspannen des Werkstücks (8) und/oder zur Veränderung der relativen Lage des Werkstücks (8) gegenüber der Vorrichtung (2) auszuführen.

21. Verfahren zum Betrieb einer Vorrichtung (2) nach einem der Ansprüche 1 bis 16, **dadurch gekennzeichnet, dass** der hydraulische Antrieb (20) verwendet wird, um während des Schleifens und/oder Finishens das Werkstück (8) der Oszillationsbewegung (30) überlagert zu verschieben.

22. Verfahren zum Betrieb einer Vorrichtung (2) nach einem der Ansprüche 2 bis 16, **dadurch gekennzeichnet, dass** das Werkstück (8) gereinigt wird, indem das Werkstück (8) rotierend angetrieben wird und der Rotationsbewegung (28) eine Oszillationsbewegung (30) überlagert wird, insbesondere mit höherer Drehzahl, Frequenz und/oder Amplitude als während des Schleifens und/oder Finishens des Werkstücks (8).

23. Verfahren nach Anspruch 22, **dadurch gekennzeichnet, dass** das Werkstück (8) zusätzlich mit Luft angeblasen wird.

## Claims

1. Device (2) for the grinding and/or finishing of a work piece (8) on and/or in at least one work piece receptacle, whereby one work piece receptacle is formed as a headstock (4) and one work piece receptacle is formed as a tailstock (6), whereby the work piece (8) can be positioned and/or clamped and/or received between the headstock (4) and the tailstock (6), whereby at least one drive device is provided, with which the work piece (8) can be set into an oscillatory motion (30), **characterised in that** the drive device takes the form of a hydraulic drive (20) and that the hydraulic drive (20) is provided on the headstock (4) and the tailstock (6) can be tracked passively or that the hydraulic drive (20) is provided on the tailstock (6) and the headstock (4) can be tracked passively.

2. Device (2) according to claim 1, **characterised in that** an additional drive (10) is provided, with which the work piece (8) can be rotated.

3. Device according to one of the foregoing claims, **characterised in that** the axis (50), on which the drive device (20) provides the propulsive force (52, 53), is parallel with a work piece axis (51), on which the propulsive force (52, 53) is introduced.

4. Device according to one of the foregoing claims, **characterised in that** the axis (50), on which the drive device (20) provides the propulsive force (52, 53), is coaxial with a work piece axis (51), on which the propulsive force (52, 53) is introduced.

5. Device (2) of one of the foregoing claims, **characterised in that** the work piece receptacle that can be passively followed up is spring loaded.

6. Device (2) in according to one of the foregoing claims, **characterised in that** a hydraulic drive (20) is provided on the headstock (4) and tailstock (6), respectively.

7. Device (2) according to one of the foregoing claims, **characterised in that** the hydraulic drive (20) has an hydraulic cylinder (20).

8. Device (2) according to claim 7, **characterised in that** the hydraulic cylinder (20) is double-acting.

9. Device (2) according to claim 7 or claim 8, **characterised in that** the hydraulic cylinder (20) can be pressurised via a proportional distributing valve (38).

10. Device (2) according to one of the foregoing claims, **characterised in that** a position detecting system (42) is provided, with which the position of the hydraulic drive (20) and/or of at least one work piece receptacle and/or of the piston (24) of the hydraulic cylinder (20) and/or of the work piece (8) can be detected.

11. Device (2) according to claim 10, **characterised in that** a number of position detecting systems (42) are provided, with which the position of a work piece receptacle can be detected.

12. Device (2) according to claim 10 or 11, **characterised in that** the proportional distributing valve (38) can be controlled as a function of the position of the hydraulic drive (20) and/or at least of one work piece receptacle and/or of the piston (24) of the hydraulic cylinder (20) and/or of the work piece (8).

13. Device (2) according to one of the claims 7 to 12, **characterised in that** a shut-off valve (40) is positioned in series with the hydraulic cylinder (20).

14. Device (2) according to one of the claims 7 to 13, **characterised in that** a pressure regulating valve (36) is provided, with which the pressure with which the hydraulic cylinder (20) can be charged, can be regulated.

15. Device (2) according to claim 14, **characterised in that** a proportional pressure regulating valve is provided, with which the pressure and thus the propulsive force (52, 53) on the work piece (8) can be varied during the machining of the work piece (8).

16. Device (2) according to one of the foregoing claims, **characterised in that** the headstock (4) and the tailstock (6) are equipped with a proportional pressure regulating valve, which in the interplay displace the work piece (8) with the friction force (55) acting on the work piece (8), so that the effective clamping force acting on the work piece (8) and the bending of the work piece (8) can be reduced.

17. Method for the operation of a device (2) according to one of the foregoing claims, **characterised in that** during the grinding and/or finishing of the work piece the amplitudes and/or the frequency of the oscillatory motion (30) are variably generated by hydraulic means.

18. Method for the operation of a device (2) according to one of the claims 1 to 16, **characterised in that** the work piece (8) is brought to rest between successive oscillation strokes (30a, 30b).

19. Method for the operation of a device (2) according to one of the claims 1 to 16, **characterised in that** the work piece (8) can be oscillated with variable acceleration and/or velocity, so that specific surfaces and geometries can be created.

20. Method for the operation of a device (2) according to one of the claims 1 to 16, **characterised in that** the hydraulic drive (20) is used in order to execute a stroke to clamp the work piece (8) and/or to change the relative position of the work piece (8) with respect to the device (2).

21. Method for the operation of a device (2) according to one of the claims 1 to 16, **characterised in that** during the grinding and/or finishing the hydraulic drive (20) is used in order to displace the work piece (8) to a position superimposed on the oscillatory motion (30).

22. Method for the operation of a device (2) according to one of the claims 2 to 16, **characterised in that** the work piece (8) is cleaned, **in that** the work piece (8) is driven in a rotational sense and an oscillatory motion (30) is superimposed on the rotational motion (28), in particular with a higher rotational speed, frequency and/or amplitude than during the grinding and/or finishing of the work piece (8).

23. Method according to claim 22, **characterised in that** the work piece (8) is additionally blasted with air.

## Revendications

1. Dispositif (2) pour finir et/ou meuler une pièce (8) maintenue sur et/ou dans au moins un support de pièce, un support de pièce se présentant sous la forme d'une poupée fixe (4) et un support de pièce se présentant sous la forme d'une poupée mobile (6), la pièce (8) pouvant être supportée en rotation et/ou serrée et/ou reçue entre la poupée fixe (4) et la poupée mobile (6), au moins un dispositif d'entraînement étant prévu pour communiquer à la pièce (8) un mouvement oscillatoire (30), **caractérisé en ce que** le dispositif d'entraînement se présente sous la forme d'un dispositif d'entraînement hydraulique (20) et **en ce que** le dispositif d'entraînement hydraulique (20) est prévu sur la poupée fixe (4), la poupée mobile (6) pouvant suivre de manière passive ou **en ce que** le dispositif d'entraînement hydraulique (20) est prévu sur la poupée mobile (6), la poupée fixe (4) pouvant suivre de manière passive.

2. Dispositif (2) selon la revendication 1, **caractérisé en ce qu'**il est prévu un dispositif d'entraînement supplémentaire (10) permettant d'entraîner la pièce (8) en rotation.

3. Dispositif selon l'une quelconque des revendications précédentes, **caractérisé en ce que** l'axe (50) suivant lequel le dispositif d'entraînement (20) génère la force d'entraînement (52, 53) est parallèle à un axe (51) de la pièce suivant lequel la force d'entraînement (52, 53) est appliquée.

4. Dispositif selon l'une quelconque des revendications précédentes, **caractérisé en ce que** l'axe (50) suivant lequel le dispositif d'entraînement (20) génère la force d'entraînement (52, 53) est coaxial à un axe (51) de la pièce selon lequel la force d'entraînement (52, 53) est appliquée.

5. Dispositif (2) selon l'une quelconque des revendications précédentes, **caractérisé en ce que** le support de pièce apte à suivre passivement est précontraint par ressort.

6. Dispositif (2) selon l'une quelconque des revendications précédentes, **caractérisé en ce qu'**un dispositif d'entraînement hydraulique (20) est prévu sur la poupée fixe (4) et sur la poupée mobile (6).

7. Dispositif (2) selon l'une quelconque des revendications précédentes, **caractérisé en ce que** le dispositif d'entraînement hydraulique (20) comporte un vérin hydraulique (20).

8. Dispositif (2) selon la revendication 7, **caractérisé en ce que** le vérin hydraulique (20) est à double effet.

9. Dispositif (2) selon la revendication 7 ou la revendication 8, **caractérisé en ce que** le vérin hydraulique (20) peut être alimenté par le biais d'une vanne proportionnelle.

10. Dispositif (2) selon l'une quelconque des revendications précédentes, **caractérisé en ce qu'**il est prévu un système de localisation (42) permettant de localiser le dispositif d'entraînement hydraulique (20) et/ou au moins un support de pièce et/ou le piston (24) du vérin hydraulique (20) et/ou la pièce (8).

11. Dispositif (2) selon la revendication 10, **caractérisé en ce qu'**il est prévu plusieurs systèmes de localisation (42) permettant de localiser chacun un support de pièce.

12. Dispositif (2) selon la revendication 10 ou la revendication 11, **caractérisé en ce que** la vanne proportionnelle (38) peut être commandée en fonction de la position du dispositif d'entraînement hydraulique (20) et/ou d'au moins un support de pièce et/ou du piston (24) du vérin hydraulique (20) et/ou de la pièce (8).

13. Dispositif (2) selon l'une des revendications 7 à 12, **caractérisé en ce qu'**un clapet anti-retour (40) est monté en amont du vérin hydraulique (20).

14. Dispositif (2) selon l'une quelconque des revendications 7 à 13, **caractérisé en ce qu'**il est prévu une soupape de régulation de pression (36) permettant de réguler la pression alimentant le vérin hydraulique (20).

15. Dispositif (2) selon la revendication 14, **caractérisé en ce qu'**il est prévu une soupape de régulation de pression proportionnelle permettant de modifier, en cours d'usinage de la pièce (8), la pression et, de ce fait, la force d'entraînement (52, 53) exercée sur ladite pièce (8).

16. Dispositif (2) selon l'une quelconque des revendications précédentes, **caractérisé en ce que** la poupée fixe (4) et la poupée mobile (6) sont chacune équipées d'une soupape de régulation de pression proportionnelle, lesdites soupapes de régulation de pression proportionnelle déplaçant de manière combinée la pièce (8) si une force de frottement (55) s'exerce sur la pièce (8), de façon à permettre de réduire la force de serrage exercée sur la pièce (8) et le cintrage de la pièce (8).

17. Procédé de mise en oeuvre d'un dispositif (2) selon l'une quelconque des revendications précédentes, **caractérisé en ce que**, pendant le meulage et/ou la finition de la pièce, les amplitudes et/ou la fréquence du mouvement oscillatoire (30) sont générées hydrauliquement de manière variable.

18. Procédé de mise en oeuvre d'un dispositif (2) selon l'une des revendications 1 à 16, **caractérisé en ce que** la pièce (8) est immobilisée entre des courses d'oscillation successives (30a, 30b).

19. Procédé de mise en oeuvre d'un dispositif (2) selon l'une quelconque des revendications 1 à 16, **caractérisé en ce que** la pièce (8) peut, pendant son usinage, être entraînée en oscillation avec une accélération et/ou une vitesse variable(s) afin de réaliser des surfaces et des géométries spécifiques.

20. Procédé de mise en oeuvre d'un dispositif (2) selon l'une quelconque des revendications 1 à 16, **caractérisé en ce que** le dispositif d'entraînement hydraulique (20) sert à exécuter une course de serrage de la pièce (8) et/ou à modifier la position relative de la pièce (8) par rapport au dispositif (2).

21. Procédé de mise en oeuvre d'un dispositif (2) selon l'une quelconque des revendications 1 à 16, **caractérisé en ce que** le dispositif hydraulique (20) sert, pendant l'opération de meulage et/ou de finition, à déplacer la pièce (8) de manière superposée au mouvement oscillatoire (30).

22. Procédé de mise en oeuvre d'un dispositif (2) selon l'une quelconque des revendications 2 à 16, **caractérisé en ce que** la pièce (8) est entraînée en rotation pour être nettoyée, le mouvement rotatif (28) étant superposé à un mouvement oscillatoire (30), notamment à une vitesse, une fréquence et/ou une amplitude plus élevées que pendant l'opération de meulage et/ou de finition de la pièce (8).

23. Procédé selon la revendication 22, **caractérisé en ce que** la pièce (8) est également nettoyée par soufflage à l'air.
